# EUROPEAN PATENT SPECIFICATION

(11) **EP 0 426 334 B1**
(45) Date of publication and mention of the grant of the patent: **06.10.1993**
(21) Application number: 90311436.1
(22) Date of filing: 18.10.1990
(51) Int. Cl.: B65G 53/46

(54) **A rotary valve**
Rotierende Klappe
Vanne rotative

(30) Priority: 30.10.1989 NL 8902680
(43) Date of publication of application: 08.05.1991
(73) Proprietor: WESTINGHOUSE BRAKE AND SIGNAL HOLDINGS LIMITED, Chippenham Wiltshire (GB)
(72) Inventor: Duivenvoorde, Wilfred, c/o DMN Machinefabriek, NL-2210 AA Noordwijkerhout (NL); Zwannenburg, Nicholas, c/o DMN Machinefabriek, NL-2210 AA Noordwijkerhout (NL); van Liempt, Gert, c/o DMN Machinefabriek, NL-2210 AA Noordwijkerhout (NL)
(74) Representative: Treves, Barry William

(56) References cited:
- CH-A- 412 537
- DE-C- 3 818 145
- GB-A- 1 039 758
- GB-A- 1 082 349

## Description

The present invention relates to a rotary valve, in particular for dosing dry substances from one section of a system to another, during which pressure differences may occur, the valve comprising: a generally cylindrical housing which is provided with a feed inlet and a discharge outlet and is sealed at ends by means of covers; and a rotor accommodated in the housing and comprising a hub rotatably supported by the covers and a plurality of blades projecting radially from it and extending towards the wall of the housing and the covers, the rotor being capable of being driven by driving means from an end projecting outside a respective one of the covers.

Such valves are used, for example, for dosing granular or powdery substances such as foodstuffs, chemical products, dyes and the like.

A valve of this type is known, for ex., from GB-A-1.082.349

In a number of applications, it is necessary for such valves to be cleaned from time to time. If such a valve is used for a product which is liable to perish, measures must be taken to prevent the product from accumulating in the valve and perishing there. Furthermore, there must be no mixing of different products when a product is changed.

To enable cleaning to be carried out in known such valves, the end of the hub of the rotor which is driven by driving means is designed so that it can be pulled out of the means used. The opposite cover can in some cases be pulled out of the housing together with the rotor to enable the housing and the rotor to be cleaned.

In the case of larger valves, the disadvantage of this is that the weight of the cover, together with the rotor, is such that it is difficult to present the rotor accurately to the opening of the housing, and to slide it into the housing. This presents the risk of damage to the rotor and/or the housing. The radial clearance between the rotor and the wall of the housing has to be small, in most cases no more than 0.1 mm.

An object of the present invention is to substantially eliminate this disadvantage, which is achieved in that means is provided between the housing and at least one of the covers for guiding and supporting that cover so that it is displaceable in the axial direction, relative to the housing, and so that it can also be swivelled in order that an opening of the housing can be cleared after the cover has been moved a sufficient distance from the housing.

This enables the rotor to be removed from the housing by means of the cover, then inserted back inside it without entailing the risk that the ends of the rotor blades might touch the upper wall of the housing, or come to rest on the cylindrical wall, possibly causing damage.

By displacing the cover over a large distance in relation to the housing, the opening of the housing could also be cleared. However, this would require a great deal of space and result in a heavy structure. The swivelling can take place immediately after the cover, with the rotor, has been displaced over such a distance that the rotor lies just outside the housing.

The means for guiding and supporting the cover is preferably formed by a bushing fitted to the cover, which bushing is displaceably and rotatably supported by a rod which extends substantially parallel with the centre line of the rotor, and which projects from the housing so that the cover can be displaced along the rod, the cover also being fitted with radially projecting guide means which, due to the weight of the cover, will rest against a guide rod which extends substantially parallel with the rod over which the bushing can be displaced when the cover is in such a position that the centre line of the cover and of the rotor coincides with the centre line of the housing.

This provides a simple, stable support whilst the cover, together with the rotor, can be displaced over a sufficient angle to clear the opening of the housing.

The rotor blades have a certain clearance not only in the radial direction, relative to the cylindrical wall of the housing, but also in the axial direction, relative to the inner faces of the covers. Now if the rotor is pulled out of the housing together with the relatively displaceable cover, the rotor might tilt slightly. As a result, the rotor blades could come into contact with the cylindrical wall of the housing and damage the wall.

To prevent this, means can be provided for clamping the rotor relative to the cover before the cover is moved from the housing, spring means being provided for keeping the rotor, in the operational condition, at the correct distance from the cover.

Thus, before the cover is displaced from the housing the rotor is first pulled tight against the cover so that no tilting of the rotor relative to the cover can take place. The spring means serves to bring the rotor to the desired distance from the cover, after the cover is pushed against the housing, so that there is no longer any mechanical contact between the rotor blades and the cover.

Furthermore, in order to provide the possibility of also cleaning the space between the rotor and the displaceable cover thoroughly, means may also be provided for supporting an end of the hub of the rotor detachably by means of the displaceable cover.

This means that the rotor can be left in the housing, and only the cover need be removed from the housing, so that the opposing faces of the displaceable cover and the rotor can also be thoroughly cleaned. Of course, this also applies to that portion of the hub which is rotatably supported in the cover.

Care must be taken, in particular, to ensure that the rod over which the bushing of the cover can be moved and the guide rod are located laterally adjacent the housing, the former rod preferably being located substantially vertically above the guide rod.

The present invention will now be described, by way of example, with reference to the accompanying drawings, in which:
Fig. 1 is a view from above of a rotary valve according to an example of the invention, in an operational condition;
Fig. 2 is a view according to Fig. 1, but with a movable cover at a certain distance from a housing of the valve;
Fig. 3 is a view according to Fig. 1, but with the cover and a rotor at a certain distance from the housing;
Fig. 4 is an end view of the valve according to Fig. 3, in which the cover with the rotor have been rotated approximately 180°; and
Fig. 5 is a sectional view of part of the valve along line V-V in Fig. 1, blades of the rotor being clamped to the cover before moving the cover, together with the rotor, into the position shown in Fig. 3.

The rotary valve comprises a housing 1, which is fitted with a supply inlet 2 and a discharge outlet 3, each of which can be connected by means of a respective one of flanges 4 and 5 to a respective pipe.

At one axial end, housing 1 is sealed by a cover 6 secured to it, cover 6 having a bearing housing 7 which supports rotatably a receiving section 8, which is connected to means (such as a motor) for driving receiving section 8. Such means is not shown in detail because they are known per se.

The other end of housing 1 is sealed by means of a cover 9, as shown in particular in Fig. 5. Cover 9 comprises sections 10, 11 and 12. Sections 11 and 12 form essentially one piece and section 12 is connected to housing 1 by means not shown in detail. Sections 10 and 11 are secured to each other by means of bolts 13, and ensure that an outermost race 14 of a bearing 15 can be received between them. An innermost race 16 acts as a support for a bushing 17.

Housing 1 accommodates a rotor 18, comprising a hub 19 and blades 20 which extend substantially as far as the wall of the housing and the covers. One end 21 of hub 19 is located, in the operational condition of the valve, in receiving section 8, and the other end 22 of hub 19 is located in bushing 17. Rotor 18 can be rotated in housing 1 by means of drivable receiving section 8, when the valve is in operation.

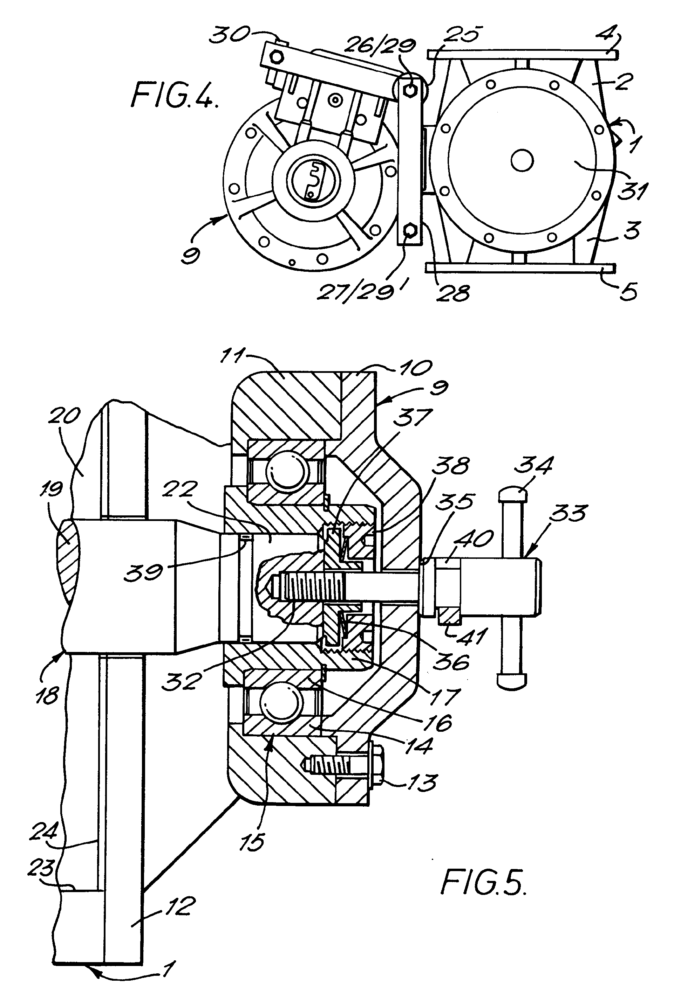

To facilitate cleaning of the valve, a bushing 25 is connected to cover 9, the bushing being displaceable over a rod 26, which is supported by means of housing 1. To housing 1 is also connected a guide rod 27 which is located under rod 26, see Fig. 4. Rods 26 and 27 are connected to each other at their free ends by means of a strip 28. Strip 28 rests against collars of rods 26 and 27 and is locked by nuts 29 and 29' respectively.

Furthermore, cover 9 is connected to a guide roll 30, see Fig. 4, which, due to the weight of the cover, rests against guide rod 27 when the cover is removed from housing 1. Roll 30 can be adjusted by means not shown in detail relative to the cover so that the centre lines of housing 1 and rotor 18 substantially coincide when cover 9, together with rotor 18, is moved along rod 26.

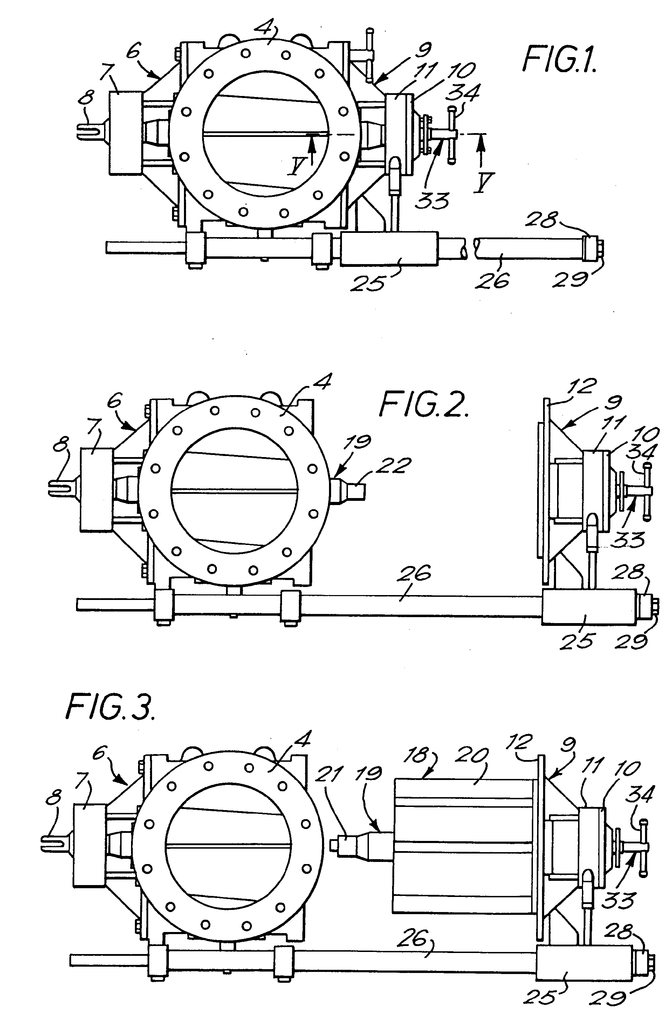

As shown in detail in Fig. 4, the cover, together with the rotor, can be swivelled to the position shown in Fig. 4, after cover 9, together with rotor 18, has been pushed to the position shown in Fig. 3. An opening 31 of housing 1 is then completely accessible so that all parts of housing 1 can be thoroughly cleaned.

If only cover 9 is removed from housing 1, as shown in Fig. 2, the upper side of rotor 18 present in housing 1 can be cleaned, as well as the inner face of cover section 12 opposite it.

As already noted, it is desirable to clamp rotor 18 relative to cover 9 before rotor 18, together with cover 9, is removed from housing 1. For this purpose, end 22 of hub 19 of rotor 18 is provided with a threaded hole 32, in which a bolt 33 can be rotated, whose free end is provided with a handle 34. Bolt 33 is also provided with a bush 35 which, when the bolt is screwed into threaded hole 32, comes to rest against cover section 10. In this manner, rotor 18 can be pulled towards cover 9 so that blades 20 come to rest against inner face 24 of cover section 12. Cover 9 can then be detached from housing 1, and the assembly of cover 9 and rotor 18 can be moved to the position shown in Fig. 3, and then possibly swivelled to the position shown in Fig. 4.

After rotor 18 has been pushed back into housing 1 by means of cover 9, bolt 33 is screwed in the opposite direction, and the rotor will be returned to its original position by means of cut spring 36, just clear of covers 6 and 9. For this purpose cup spring 36 is received between stop rings 37 and 38. Stop ring 37 rests against the top face of hub 19 and stop ring 38 is screwed into bushing 17.

In order to prevent undesirable displacement of end 22 of hub 19 in bushing 17, a groove 39 can be provided in section 22. A ring can be received in groove 39, for example, causing considerable friction.

We only cover 9 is required to be removed from housing 1, and moved to the position shown in Fig. 2, hub 19 of rotor 18 must be forced out of bushing 17.

To achieve this, use is again made of bolt 33, which is also provided with a groove 40 in which a strip 41 can be achieved which is connected to cover section 10 by means not shown in detail.

When bolt 33 is screwed out of threaded hole 32, it is retained by strip 41 so that hub 19 will be forced out of bushing 17.

It should also be noted that it may be desirable to fit a safety device to prevent the valve driving means from being switched on whilst rotor 18 is still clamped against cover section 12 or if bolt 33 remains in threaded hole 32. Such a safety device may, for example, be formed by a limit switch which is installed in such a location that it brakes a power circuit for the driving means due to the presence of bolt 33 in a certain area.

## Claims

1. A rotary valve for dosing dry substances from one section of a system to another, during which pressure differences may arise, which valve comprises: a generally cylindrical housing (1), which is provided a feed inlet (2) and a discharge outlet (3) and is sealed at ends by means of covers (6, 9); and a rotor (18) accommodated in the housing and comprising a hub (19) rotatably supported by the covers (6, 9) and a plurality of blades (20) projecting radially from it and extending towards the wall of the housing and the covers, the rotor being capable of being driven from an end (21) projecting outside a respective one of the covers, characterised in that means (25-30) is provided between the housing and at least one of the covers (9) for guiding and supporting that cover so that it is displaceable in the axial direction, relative to the housing, and so that it can also be swivelled in order that an opening (31) of the housing can be cleared, after the cover has been moved a sufficient distance from the housing.

2. A valve according to claim 1, characterised in that the means for guiding and supporting the cover (9) is formed by a bushing (25) fitted on the cover (9), which bushing is displaceably and rotatably supported by a rod (26) which extends substantially parallel with the centre line of the rotor (18), and which projects from the housing (1) so that the cover can be displaced along the rod, the cover also being provided with radially projecting guide means (30) which, due to the weight of the cover, will rest against a guide rod (27) which extends substantially parallel with the rod over which the bushing can be moved when the cover is located in the position in which the centre line of the cover and of the rotor coincides with the centre line of the housing.

3. A valve according to claim 1 or 2, characterised in that means (32-35) are provided for clamping the rotor (18) relative to the cover (9) before the cover is moved from the housing (1), spring means (36) being provided for keeping the rotor (18), in the operational condition, at the correct distance from the cover.

4. A valve according to any preceding claim, characterised in that an end (22) of the hub (19) of the rotor (18) is detachably supported by the displaceable cover (9).

5. A valve according to claim 2 or either of claims 3 and 4 as dependent on claim 2, characterised in that the rod (26) over which the bushing (25) of the cover (9) can be moved and the guide rod (27) are located laterally adjacent the housing (1), the former rod (26) being located vertically above the guide rod (27).

## Patentansprüche

1. Drehventil zum Dosieren von Trockensubstanzen von einem Abschnitt eines Systems zu einem anderen, zwischen denen Druckdifferenzen auftreten können, welches Ventil umfaßt: ein allgemein zylindrisches Gehäuse (1), das mit einem Speiseeinlaß (2) und einem Auslaß (3) versehen und an den Enden mittels Deckeln (6, 9) abgedichtet ist; und einen in dem Gehäuse aufgenommenen Rotor (18), der eine durch die Deckel (6,9) drehbar abgestützte Nabe (19) und eine Vielzahl von Flügeln (20) umfaßt, die radial von ihm abstehen und sich zur Wand des Gehäuses und zu den Deckeln hin erstrecken, wobei der Rotor befähigt ist, von einem jeweiligen Deckel nach außen vorstehenden Ende (21) aus angetreben zu werden, dadurch gekennzeichnet, daß Mittel (25, 30) zwischen dem Gehäuse und mindestens einem der Deckel (9) vorgesehen ist, den Deckel so zu führen und zu stützen, daß er in der axialen Richtung relativ zu dem Gehäuse versetzbar ist und so, daß er auch geschwenkt werden kann, damit eine Öffnung (31) des Gehäuses freigegeben werden kann, nachdem der Deckel mit einem ausreichenden Abstand von dem Gehäuse weg bewegt wurde.

2. Ventil nach Anspruch 1, dadurch gekennzeichnet, daß das Mittel zum Führen und Abstützen des Deckels (9) gebildet wird durch eine an den Deckel (9) angepaßte Büchse (25); welche Büchse verschieb- und verdrehbar durch einen Stab (26) abgestützt ist, der sich im wesentlichen parallel zu der Mittellinie des Rotors (18) erstreckt und von dem Gehäuse (1) so absteht, daß der Deckel längs des Stabes verschoben werden kann, wobei der Deckel auch mit radial vorstehendem Führungsmittel (30) versehen ist, welches infolge des Gewichtes des Deckels auf einem Führungsstab (27) aufsitzt, der sich im wesentlichen parallel zu dem Stab erstreckt, über den die Büchse bewegt werden kann, wenn der Deckel in der Position angeordnet ist, in der die Mittellinie des Deckels und des Rotors mit der Mitellinie des Gehäuses zusammenfallen.

3. Ventil nach Anspruch 1 oder 2, dadurch gekennzeichnet, daß Mittel (32-35) vorgesehen sind, um den Rotor (18) relativ zum Deckel (9) zu klemmen, bevor der Deckel von dem Gehäuse (1) wegbewegt wird, wobei Federmittel (36) vorgesehen sind, um den Rotor (18) in dem Betriebszustand im richtigen Abstand von dem Deckel zu halten.

4. Ventil nach einem der vorangehenden Ansprüche, dadurch gekennzeichnet, daß ein Ende (22) der Nabe (19) des Rotors (18) abnehmbar durch den verschiebbaren Deckel (9) abgestützt ist.

5. Ventil nach Anspruch 2 oder einem der Ansprüche 3 und 4 in Abhängigkeit vom Anspruch 2, dadurch gekennzeichnet, daß der Stab (26), über den die Büchse (25) des Deckels (9) bewegt werden kann, und der Führungsstab (27) seitlich benachbart zum Gehäuse (1) angeordnet sind, und daß der erstere Stab (26) vertikal über dem Führungsstab (27) angeordnet ist.

## Revendications

1. Une vanne rotative de dosage de substances sèches, d'une section à une autre d'un système, pendant lequel il peut se produire des différences de pression, vanne qui comprend: un boîtier généralement cylindrique (1), dans lequel sont ménagées une entrée d'amenée (2) et une sortie de décharge (3) et qui est fermée de façon étanche à ses extrémités au moyen de couvercles (6, 9); et un rotor (18) logé dans le boîtier et comprenant un moyeu (19), supporté à rotation par les couvercles (6, 9), et une série de palettes (20) en saillie radiale à partir de celui-ci et s'étendant vers la paroi du boîtier et les couvercles, le rotor pouvant être entraîné à partir d'une extrémité (21) qui fait saillie vers l'extérieur de l'un des couvercles respectifs, caractérisée en ce qu'il est prévu, entre le boîtier et au moins l'un des couvercles (9), un moyen (25, 30) de guidage et de support de ce couvercle d'une manière telle que ce dernier puisse être déplacé par rapport au boîtier dans la direction axiale et qu'il puisse également être pivoté afin qu'une ouverture (31) du boîtier puisse être dégagée lorsque le couvercle a été enlevé à une distance suffisante du boîtier.

2. Une vanne selon la revendication 1, caractérisée en ce que le moyen de guidage et de support du couvercle (9) est formé d'une douille (25) assemblée sur le couvercle (9), douille qui est supportée, de manière à pouvoir être déplacée et à rotation, par une tige (26) qui s'étend sensiblement en parallèle à l'axe du rotor (18) et qui fait saillie hors du boîtier (1) d'une manière telle que le couvercle peut être déplacé le long de la tige, le couvercle étant également pourvu de moyens de guidage (30) en saillie radiale qui reposent, en raison du poids du couvercle, contre une tige de guidage (27) qui s'étend sensiblement en parallèle à la tige au-dessus de laquelle la douille peut être déplacée lorsque le couvercle est situé dans la position dans laquelle l'axe du couvercle et du rotor coïncide avec l'axe du boîtier.

3. Une vanne selon la revendication 1 ou 2, caractérisée en ce qu'il est prévu des moyens (32 à 35) pour serrer le rotor (18) vis-à-vis du couvercle (9) avant que le couvercle ne soit déplacé du boîtier (1), un moyen élastique (36) étant prévu pour maintenir le rotor (18) à la distance correcte du couvercle dans la condition de fonctionnement.

4. Une vanne selon une revendication précédente quelconque, caractérisée en ce qu'une extrémité (22) du moyeu (19) du rotor (18) est supportée de manière détachable par le couvercle (9) qui peut être déplacé.

5. Une vanne selon la revendication 2, ou selon l'une ou l'autre des revendications 3 et 4 lorsqu'elle dépend de la revendication 2, caractérisée en ce que la tige (26) au-dessus de laquelle la douille (25) du couvercle (9) peut être déplacée et la tige de guidage (27) sont situées latéralement à côté du boîtier (1), la première (26) de ces tiges étant située verticalement au-dessus de la tige de guidage (27).
